# FASCICULE DE BREVET EUROPEEN

(11) **EP 2 004 974 B1**
(45) Date de publication et mention de la délivrance du brevet: **07.09.2011**
(21) Numéro de dépôt: 07731789.9
(22) Date de dépôt: 21.03.2007
(51) Int. Cl.: F02D 41/02, F02D 41/40, F01N 9/00

(54) **SYSTEME ET PROCEDE D ' AIDE A LA REGENERATION D ' UN FILTRE A PARTICULES D ' UN MOTEUR DIESEL**
SYSTEM UND VERFAHREN ZUR UNTERSTÜTZUNG DER REGENERATION EINES DIESELMOTOR-TEILCHENFILTERS
SYSTEM AND METHOD FOR ASSISTING REGENERATION OF A DIESEL ENGINE PARTICULATE FILTER

(30) Priorité: 11.04.2006 FR 0651309
(43) Date de publication de la demande: 24.12.2008
(73) Titulaire: Peugeot Citroën Automobiles Société Anonyme, 78140 Velizy Villacoublay (FR)
(72) Inventeur: MARCELOT, Julien, 70563 Stuttgart (DE); REYES, Frank, F-92500 Rueil-Malmaison (FR)
(74) Mandataire: Ménès, Catherine
(86) Numéro de dépôt international: PCT/FR2007/050976
(87) Numéro de publication internationale: WO 2007/116163

(56) Documents cités:
- WO-A-02/38932
- DE-A1- 19 753 842
- FR-A- 2 862 100
- US-A1- 2005 252 198

## Description

La présente invention concerne un système d'aide à la régénération d'un filtre à particules agencé dans une ligne d'échappement d'un moteur Diesel de véhicule automobile, et plus particulièrement, un système d'aide à la régénération d'un filtre à particules associé à un catalyseur d'oxydation agencé dans ladite ligne en amont du filtre ou dans un même support que celui-ci.

Classiquement, pour régénérer un filtre à particules (FAP) agencé dans un ligne d'échappement de moteur Diesel de véhicule automobile, il est nécessaire d'élever sa température à un niveau minimal de combustion des suies qu'il stocke, généralement de l'ordre de 500°C.

A cet effet, un catalyseur d'oxydation est agencé dans la ligne d'échappement en amont du filtre. Ce catalyseur est apte à brûler par catalyse des hydrocarbures imbrûlés présents dans les gaz d'échappement du moteur, provoquant de ce fait la production d'un exotherme en entrée du filtre à particules, et de là une élévation de la température interne de celui-ci.

Afin d'assurer la présence de tels hydrocarbures imbrûlés dans les gaz d'échappement, le moteur est équipé de moyens d'alimentation propres à injecter du carburant de façon tardive dans les cylindres du moteur, c'est-à-dire lors de la phase de détente de ceux-ci, une telle injection étant communément désignée sous le nom de « post-injection ».

Or, le catalyseur doit présenter une température minimale pour fonctionner de manière satisfaisante. En dessous de cette température, le catalyseur n'est pas amorcé, et des hydrocarbures en trop grande quantité dans les gaz d'échappement par rapport à la capacité de traitement du catalyseur ne sont pas catalysés et sont par conséquent rejetés dans l'atmosphère.

On connaît de la publication FR-A-2862100 des systèmes d'aide à la régénération qui comportent deux capteurs de températures, l'un en amont et l'autre en aval du catalyseur, et des moyens de pilotage des moyens d'alimentation en carburant du moteur qui :
- déterminent l'état d'amorçage du catalyseur en fonction des températures amont et aval acquises ;
- lorsque le catalyseur est déterminé comme non amorcé, commandent l'amorçage de celui-ci en pilotant les moyens d'alimentation pour qu'ils délivrent au moteur un premier type de post-injection produisant une faible concentration d'hydrocarbures imbrûlés dans les gaz d'échappement ; et
- lorsque le catalyseur est déterminé comme amorcé, basculent les moyens d'alimentation dans un mode de fonctionnement avec un second type de post-injection produisant une concentration plus importante d'hydrocarbures imbrûlés dans les gaz d'échappement. Le catalyseur est alors apte à traiter une telle concentration d'hydrocarbures et ainsi produire un exotherme permettant l'élévation de la température interne du filtre à particules à sa température de régénération.

Or, ce type de système d'aide à la régénération comporte deux capteurs de température coûteux spécifiquement dédiés à l'application de régénération du filtre à particules.

On connaît également de la publication WO 02/38932 un système similaire qui concerne l'agencement d'un catalyseur d'oxydation en amont d'un filtre à particules, avec des capteurs de température en amont et en aval du catalyseur d'oxydation. De plus, cette publication propose, selon les cas d'espèces, d'utiliser des calculs et/ou des simulations pour remplacer des capteurs.

On connaît aussi de la publication DE 197 53 842 A1 un système avec un pré-catalyseur et un catalyseur principal, et avec des capteurs de température en amont et en aval du pré-catalyseur. Cette publication propose de remplacer la détection de la température en aval du pré-catalyseur par une modélisation. Elle propose aussi d'identifier l'état d'amorçage du pré-catalyseur sur la base des températures en amont et en aval du pré-catalyseur.

Le but de la présente invention est de résoudre le problème susmentionné.

A cet effet, l'invention a pour objet un système d'aide à la régénération d'un filtre à particules agencé dans une ligne d'échappement d'un moteur Diesel de véhicule automobile et associé à un catalyseur d'oxydation agencé dans ladite ligne, le moteur étant équipé de moyens d'alimentation aptes à injecter du carburant dans les cylindres de celui-ci lors de leur phase de détente, lors de post-injections, ledit système comportant des moyens de pilotage des moyens d'alimentation aptes à piloter ceux-ci selon une stratégie de régénération du filtre à particules dans laquelle les moyens de pilotage sont aptes à basculer les moyens d'alimentation entre un premier mode de fonctionnement avec un premier type de post-injection pour amorcer le catalyseur d'oxydation et un second mode de fonctionnement avec un second type de post-injection pour la production d'un exotherme par le catalyseur amorcé afin de régénérer le filtre à particules, et
un unique capteur de température agencé dans la ligne d'échappement en amont du catalyseur d'oxydation, les moyens de pilotage étant aptes à basculer les moyens d'alimentation entre les premier et second modes de fonctionnement en fonction de la température acquise en amont du catalyseur. Le moteur étant équipé de moyens d'admission d'air dans celui-ci, le système comporte des moyens d'acquisition d'un débit d'air en entrée du moteur, du régime de rotation du moteur et de la charge de celui-ci, et les moyens de pilotage comportent des seconds moyens de sélection d'un mode parmi les premier et second modes de fonctionnement des moyens d'alimentation comprenant des moyens d'estimation de la température en aval du catalyseur d'oxydation en fonction de la température acquise en amont de celui-ci, du débit d'air acquis, du régime acquis, de la charge acquise et du type de post-injection en cours d'application ; et des moyens de sélection d'un mode parmi les premier et second modes de fonctionnement des moyens d'alimentation en fonction de la température acquise en amont du catalyseur d'oxydation et de la température estimée en aval de celui-ci.

Selon un mode particulier de réalisation, les moyens de pilotage comportent des premiers moyens de sélection d'un mode parmi les premier et second modes de fonctionnement des moyens d'alimentation à partir d'une loi de sélection prédéterminée du type à hystérésis ;

L'invention a également pour objet un procédé d'aide à la régénération d'un filtre à particules agencé dans une ligne d'échappement d'un moteur Diesel de véhicule automobile et associé à un catalyseur d'oxydation agencé dans ladite ligne, le moteur étant équipé de moyens d'alimentation aptes à injecter du carburant dans les cylindres de celui-ci lors de leur phase de détente, lors de post-injections, ledit procédé comportant une étape de pilotage des moyens d'alimentation selon une stratégie de régénération du filtre à particules comportant une sous-étape de basculement des moyens d'alimentation entre un premier mode de fonctionnement avec un premier type de post-injection pour amorcer le catalyseur d'oxydation et un second mode de fonctionnement avec un second type de post-injection pour la production d'un exotherme par le catalyseur amorcé afin de régénérer le filtre à particules, et

une unique étape de mesure de température, cette étape consistant à mesurer la température en amont du catalyseur d'oxydation au moyen d'un unique capteur de température, la sous-étape de basculement des moyens d'alimentation entre les premier et second modes de fonctionnement comportant une sélection d'un mode parmi les premier et second modes de fonctionnement en fonction de la température acquise en amont du catalyseur d'oxydation et de la température estimée en aval du catalyseur d'oxydation, cette température estimée étant fonction de la température acquise en amont du catalyseur d'oxydation, du débit d'air en entrée du moteur, du régime de rotation du moteur et de la charge de celui-ci et du type de post-injection en cours d'application.

L'invention sera mieux comprise à la lecture de la description qui va suivre, donnée uniquement à titre d'exemple, et faire en relation avec les dessins annexés, dans lesquels :
- la figure 1 est une vue schématique d'un moteur Diesel de véhicule automobile équipé d'une ligne d'échappement comportant un filtre à particules en aval d'un catalyseur d'oxydation, et associé à un système selon l'invention ;
- la figure 2 est une vue schématique d'un module de sélection du mode de fonctionnement de moyens d'alimentation en carburant du moteur, entrant dans la constitution du système de la figure 1 ;
- la figure 3 est un graphique d'une hystérésis de sélection utilisée par le module de la figure 2 ;
- la figure 4 est un graphique de plages de températures représentatives de modes de fonctionnement des moyens d'alimentation en carburant du moteur, utilisées par le module de la figure 2 ;
- la figure 5 est une vue schématique de moyens d'estimation de la température en aval du catalyseur, entrant dans la constitution du module de la figure 2.

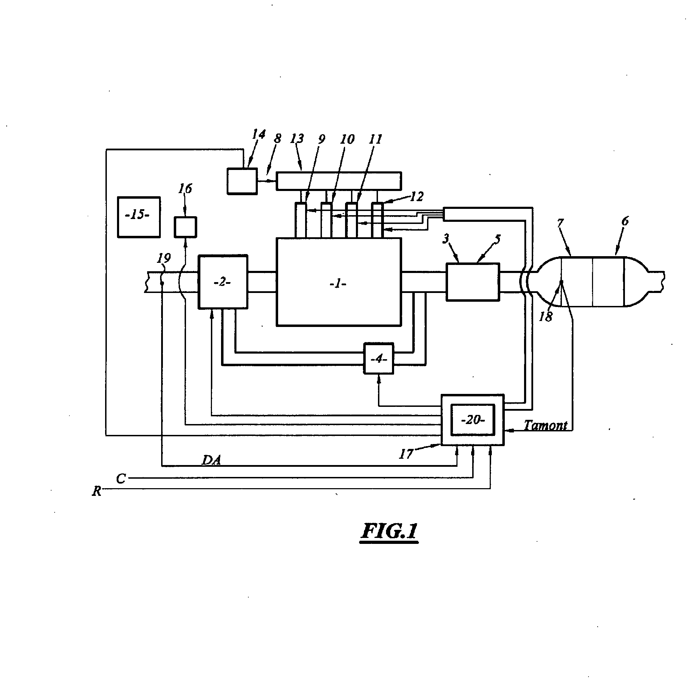

Sur la figure 1, on a illustré de façon schématique un moteur Diesel 1 pour véhicule automobile.

Ce moteur est associé à des moyens 2 d'admission d'air en entrée de celui-ci et à une ligne 3 d'échappement des gaz brûlés. Des moyens 4 de recirculation d'une partie des gaz d'échappement (EGR) en entrée du moteur 1 sont également prévus et par exemple agencés entre la sortie du moteur et les moyens 2 d'admission d'air, comme cela est connu en soi.

De manière classique, la ligne d'échappement 3 est également associée à un turbocompresseur 5 et plus particulièrement la partie de turbine de celui-ci.

Pour limiter le rejet de suies dans l'atmosphère, la ligne d'échappement 3 comprend un filtre à particules 6 apte à stocker des suies émises par le moteur 1 et un catalyseur d'oxydation 7 agencé en amont du filtre 6 et apte à catalyser des hydrocarbures imbrûlés présents dans les gaz d'échappement du moteur.

En variante, le filtre à particules et le catalyseur d'oxydation sont intégrés sur un même support. Ils sont par exemple formés par un support poreux en nid d'abeille pour le filtrage des suies et imprégné d'un matériau catalytique pour la combustion des hydrocarbures imbrûlés.

Le catalyseur 7 présente de manière classique au moins deux états de fonctionnement, à savoir un état de fonctionnement amorcé dans lequel sa température interne est suffisamment élevée pour brûler des hydrocarbures présents en grande concentration dans les gaz d'échappement, et un état de fonctionnement non amorcé dans lequel sa température interne est trop basse pour effectuer une telle opération.

Le catalyseur 7 est prévu dans la ligne d'échappement 3 en amont du filtre 6 pour générer en entrée de celui-ci, un exotherme par oxydation des hydrocarbures imbrûlés. Cet exotherme a pour effet d'augmenter la température interne du filtre à particules 6 afin de brûler les suies que celui-ci contient.

Le moteur 1 est également associé à des moyens 8 d'alimentation en carburant des cylindres de celui-ci, dans cet exemple au nombre de quatre, au moyen d'injecteurs 9, 10, 11, 12. Ces injecteurs 9, 10, 11, 12 sont à commande électronique et peuvent donc être commandés pour délivrer des injections de carburant dans les cylindres présentant un nombre, une quantité de carburant et un phasage voulus.

Les moyens 8 d'alimentation comprennent une rampe commune d'alimentation 13, raccordée aux injecteurs 9, 10, 11, 12 et reliée à une pompe à haute pression 14 pour son d'approvisionnement en carburant à partir d'un réservoir 15 de carburant.

Le réservoir 15 est associé à des moyens d'ajout au carburant d'un additif, stocké dans un réservoir auxiliaire 16 et destiné à se déposer sur les parois du filtre à particules 6 pour abaisser la température de combustion des suies piégées dans celui-ci, et donc aider à sa régénération.

Le moteur et les différents organes qui viennent d'être décrits sont également associés à un système de contrôle de leur fonctionnement. Ce système comporte notamment une unité 17 de traitement d'informations, comprenant tout calculateur approprié, raccordée à un ensemble prédéterminé de moyens d'acquisition d'informations relatives au fonctionnement du moteur, des organes associés et/ou de conditions de roulage du véhicule.

L'unité 17 est propre à délivrer un ensemble de signaux de commande de fonctionnement au moteur et aux organes associés, en fonction des informations acquises, comme cela est connu en soi dans l'état de la technique.

Le système de contrôle du fonctionnement du moteur est notamment adapté pour commander les moyens 8 d'alimentation pour qu'ils délivrent aux cylindres du carburant sous la forme d'injections multiples, à savoir au moins une injection principale de carburant et une injection de carburant pendant la phase de détente de ceux-ci, ou post-injection.

Le système de contrôle du fonctionnement du moteur est par ailleurs en charge du pilotage de la régénération du filtre à particules 6. A cet effet, le système est apte à basculer le fonctionnement des moyens 8 d'alimentation entre un mode de fonctionnement normal du moteur et un mode de fonctionnement de régénération du filtre.

Dans le mode de fonctionnement de régénération, le système de contrôle pilote les moyens 8 d'alimentation en carburant pour qu'ils délivrent une post-injection aux cylindres ayant pour effet d'augmenter la concentration d'hydrocarbures imbrûlés dans les gaz d'échappement.

Cette post-injection prend la forme d'une ou plusieurs injections distinctes de carburant dans les cylindres, ou, en variante, le système de contrôle pilote les moyens 8 d'alimentation pour qu'ils décalent l'injection principale de carburant dans les cylindres vers la phase de détente de ceux-ci.

Lors du mode de fonctionnement de régénération du filtre 6, le système de contrôle bascule, conformément à une stratégie prédétermi née de basculement expliquée plus en détail par la suite, le fonctionnement des moyens 8 d'alimentation entre un premier sous-mode de fonctionnement lors duquel un premier type de post-injection est utilisé, ci-après désigné « mode 1 », et un second sous-mode de fonctionnement lors duquel un second type de post-injection est utilisé, ci-après désigné « mode 2 ».

La post-injection du premier type a pour effet de produire dans les gaz d'échappement des hydrocarbures imbrûlés en concentration limitée mais suffisante pour amorcer le catalyseur 6. Sensiblement la totalité des ces hydrocarbures est alors brûlée pour l'amorçage du catalyseur de sorte que sensiblement aucun hydrocarbure provenant de cette post-injection n'est rejeté dans l'atmosphère.

La post-injection du second type a quant à elle pour effet de produire dans les gaz d'échappement des hydrocarbures en concentration plus élevée pour que le catalyseur 7, une fois amorcé, reste dans son état amorcé et génère un exotherme suffisamment important en entrée du filtre à particules 6 pour que la température interne de celui-ci atteigne le niveau requis pour la combustion des suies stockées.

Pour la commande du basculement du fonctionnement des moyens 8 d'alimentation entre les modes 1 et 2, le système de contrôle comprend :
- un unique capteur 18 de température placé dans la ligne d'échappement 3 en amont du catalyseur 6 et mesurant une température Tamont ;
- un débitmètre 19 agencé en entrée des moyens 2 d'admission d'air pour mesurer le débit DA des gaz frais entrant dans le moteur ;
- un capteur de régime (non représenté) pour mesurer le régime de rotation R du moteur ;
- des moyens d'acquisition de la charge C du moteur (non représentés) ; et
- un module 20 de sélection du mode de fonctionnement des moyens 8 d'alimentation, connecté aux capteurs et moyens d'acquisition précités, et apte à sélectionner, en fonction des mesures qu'il reçoit, l'un ou l'autre des modes 1 et 2. Le module 20 délivre sa sélection à la portion de l'unité 17 en charge de la commande des moyens 8 d'alimentation qui en réponse bascule le fonctionnement de ceux-ci pour appliquer le mode de fonctionnement sélectionné. Le module 20 est par exemple compris dans l'unité 17.

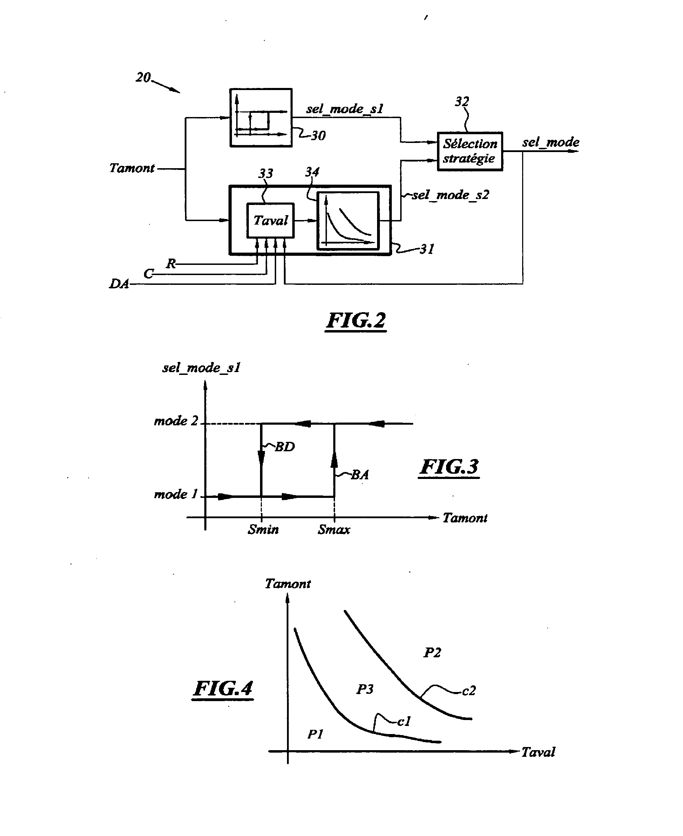

La figure 2 est une vue schématique du module 20 de sélection.

Ce module 20 comporte des premiers moyens 30 sélectionnant un mode de fonctionnement parmi les modes 1 et 2 et délivrant un signal sel_mode_s1 dont la valeur est représentative du mode sélectionné. Le module 20 comporte également des seconds moyens 31 sélectionnant, d'une manière différente de celle des premiers moyens 30, un mode de fonctionnement parmi les modes 1 et 2 et délivrant un signal sel_mode_s2 dont la valeur est représentative du mode sélectionné.

Le module 20 comporte enfin des troisièmes moyens 32 de sélection recevant en entrée les signaux sel_mode_s1 et sel_mode_s2. Les troisièmes moyens 32 déterminent en fonction de ceux-ci quel est le mode de fonctionnement finalement choisi et délivrent à la portion de l'unité 17 en charge de la commande des moyens 8 d'alimentation un signal sel_mode représentatif du mode finalement choisi.

Dans une première variante, le mode 2 est prioritaire sur le mode 1. Ainsi, si les premiers moyens 30 sélectionnent le mode 1, et si les seconds moyens 31 sélectionnent le mode 2, ou vice versa, les troisièmes moyens 32 sélectionnent le mode 2.

Dans une seconde variante, les troisièmes moyens 32 sélectionnent le mode 2 de fonctionnement si à la fois les premiers et les seconds moyens 30, 31 ont sélectionné celui-ci.

Il va maintenant être expliqué le fonctionnement des premiers et seconds moyens 30, 31 de sélection.

Les premiers moyens 30 de sélection reçoivent en entrée la te m-pérature Tamont mesurée et sélectionnent uniquement en fonction de celle-ci le mode 1 ou le mode 2 de fonctionnement. Les premiers moyens 30 mettent en oeuvre une loi de sélection de mode du type à hystérésis.

Un tracé de cette hystérésis est illustré à la figure 3 et a pour abscisses la température Tamont mesurée et pour ordonnées le signal mode_sel_s1. Le signal mode_sel_s1 prend une première valeur, par exemple 0, pour le mode 1, et une seconde valeur, par exemple 1, pour le mode 2, la seconde valeur étant supérieure à la première valeur.

La branche ascendante BA de l'hystérésis est ici définie par une première température de seuil Smax prédéterminée. Pour des valeurs de température Tamont mesurées supérieures à Smax, le mode 2 est systématiquement sélectionné par les premiers moyens 30. La branche descendante BD de l'hystérésis est définie par une seconde valeur de seuil Smin. Pour des valeurs de température Tamont mesurées inférieures à Smin, le mode 1 est systématiquement sélectionné par les moyens 30. La sélection du mode 1 ou du mode 2 pour des valeurs de température Tamont comprises entre les valeurs Smin et Smax dépend de l'évolution temporelle de la température Tamont mesurée illustrée par les flèches sur l'hystérésis.

Les valeurs de seuil Smax et Smin sont déterminées lors d'une étude antérieure pour caractériser la relation existant entre la température Tamont en amont du catalyseur et l'état amorcé de celui-ci.

En se référant de nouveau à la figure 2, les seconds moyens 31 de sélection reçoivent en entrée les mesures de la température Tamont, du régime R du moteur, de la charge C du moteur et du débit d'air DA, ainsi que le signal sel_mode.

Les seconds moyens 31 de sélection comprennent des moyens 32 qui estiment la température Taval en sortie du catalyseur d'oxydation 7 en fonction des mesures Tamont, R, C et DA et du type de post-injection actuellement appliquée qui est représenté par le signal sel_mode, comme cela sera expliqué plus en détail par la suite.

Les seconds moyens 31 de sélection comprennent également des moyens 33 de détermination du signal de sélection sel_mode_2. Ils reçoivent en entrée la température Tamont mesurée et la température Taval estimée et déterminent la valeur du signal sel_mode_2 en fonction de l'appartenance du couple de température (Tamont, Taval) à des plages prédéterminées de températures.

Ces plages sont illustrées à la figure 4 qui est un graphique ayant pour abscisses la température Taval estimée et pour ordonnées la température Tamont mesurée. Ce graphique comporte deux courbes décroissantes distinctes C1 et C2 définissant une première plage P1 correspondant à la surface au-dessous de la courbe C1, une seconde plage P2 correspondant à la surface au dessus de la courbe C2 et un troisième plage intermédiaire P3 correspondant à la surface comprise entre les courbes C1 et C2.

Lorsque le couple (Tamont, Taval) appartient à la plage P1, les moyens 33 assignent au signal sel_mode_s2 une valeur représentative du mode 1 de fonctionnement. Lorsque ce couple appartient à la plage P2, les moyens 33 assignent au signal sel_mode_se une valeur représentative du mode 2 de fonctionnement.

Enfin lorsque le couple (Tamont, Taval) appartient à la plage intermédiaire P3, la valeur du signal sel_mode_s2 dépend de l'évolution passée des valeurs de ce couple, le signal sel_mode_s2 ne changeant de va leur uniquement si le couple de températures franchit la courbe C1 pour entrer dans la plage P1 ou franchit la courbe C2 pour entrer dans la plage P2. La plage intermédiaire P3 évite ainsi, à la manière d'une hystérésis, des oscillations de la valeur du signal sel_mode_s2.

En variante, une seule courbe est utilisée pour délimiter uniquement deux plages, à savoir les plages P1 et P2.

Les courbes C1 et C2 sont par exemple mémorisées sous la forme de cartographies dans les moyens 33 et sont déterminées lors de l'étude antérieure.

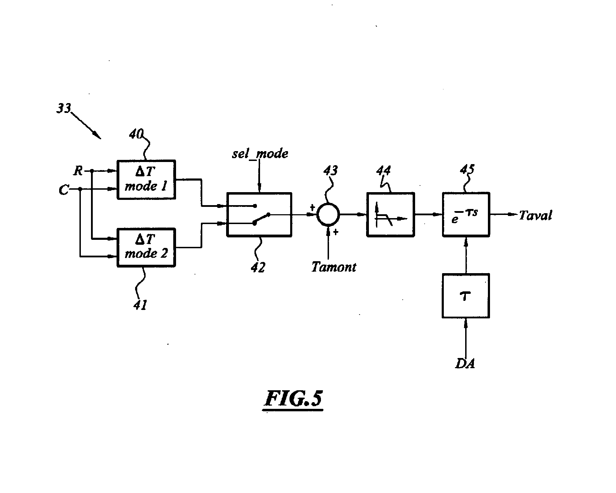

En se référant à présent à la figure 5, les moyens 33 d'estimation de la température Taval en aval du catalyseur comprennent des premiers moyens 40 de détermination d'une variation de température ΔTmode1 engendrée par la combustion d'hydrocarbures imbrûlés issus d'une post-injection du premier type pour un couple de régime et de charge moteur donné. A cet effet, les premiers moyens 40 reçoivent en entrée les mesures du régime R et de la charge C du moteur et évaluent une cartographie prédéterminée de variations de température en fonction de couples de régime et charge.

De même, les moyens 33 d'estimation comprennent des seconds moyens 41, analogues aux premiers moyens 40. Ces seconds moyens 41 déterminent une variation de température ΔTmode2 engendrée par la combustion d'hydrocarbures imbrûlés issus d'une post-injection du second type pour un couple de régime et de charge moteur donné.

Des moyens 42 de sélection sont connectés aux sorties des premiers et seconds moyens 40, 41 de détermination de variation de température. Ils reçoivent le signal sel_mode représentatif de la post-injection qui est actuellement appliquée. Ils sélectionnent, et délivrent en sortie, la variation ΔTmode1 de température si le signal sel_mode correspond au mode 1, ou la variation ΔTmode2 sinon.

Un additionneur 43 est connecté aux moyens 42 de sélection pour en recevoir la sortie et additionne celle-ci à la température Tamont mesurée. La sortie de l'additionneur 43 est connectée à un filtre 44 qui lui applique un filtrage du type passe-bas modélisant des phénomènes de lissage de la température au travers du catalyseur d'oxydation induit par l'inertie thermique du support de celui-ci, généralement formé dans une céramique.

Le filtre passe-bas 44 est quant à lui connecté à un filtre de retard 45 appliquant un retard à la sortie du filtre 44 et délivrant en sortie la température Taval estimée. Le retard appliqué par le filtre 44 modélise le temps pris par les gaz d'échappement pour traverser le catalyseur d'oxydation 7. Ce retard est déterminé par des moyens 45, connectés au filtre à retard 44, en fonction du débit d'air DA mesuré qu'ils reçoivent en entrée.

Bien entendu d'autres modes de réalisation sont possibles.

Par exemple, le module 20 de sélection peut ne comprendre que les seconds moyens 31 de sélection, les troisièmes moyens 32 de sélection étant alors omis.

## Revendications

1. Système d'aide à la régénération d'un filtre à particules (6) agencé dans une ligne d'échappement (3) d'un moteur Diesel (1) de véhicule automobile et associé à un catalyseur d'oxydation (7) agencé dans ladite ligne (3), le moteur (1) étant équipé de moyens (2) d'admission d'air dans celui-ci et de moyens (8) d'alimentation aptes à injecter du carburant dans les cylindres de celui-ci lors de leur phase de détente, lors de post-injections, ledit système comportant un unique capteur de température (18) agencé dans la ligne d'échappement (3) en amont du catalyseur d'oxydation (7), et des moyens (17) de pilotage des moyens d'alimentation aptes à piloter ceux-ci selon une stratégie de régénération du filtre à particules (6) dans laquelle les moyens (17) de pilotage sont aptes à basculer les moyens (8) d'alimentation entre un premier mode de fonctionnement avec un premier type de post-injection pour amorcer le catalyseur d'oxydation (7) et un second mode de fonctionnement avec un second type de post-injection pour la production d'un exotherme par le catalyseur d'oxydation (7) amorcé afin de régénérer le filtre à particules (6),
**caractérisé**
• **en ce que** le système comporte des moyens d'acquisition d'un débit d'air en entrée du moteur, du régime de rotation du moteur et de la charge de celui-ci ;
• et **en ce que** les moyens (17) de pilotage comportent des seconds moyens (31) de sélection d'un mode parmi les premier et second modes de fonctionnement des moyens (8) d'alimentation comprenant :
■ des moyens (33) d'estimation de la température en aval du catalyseur d'oxydation (7) en fonction de la température acquise en amont de celui-ci, du débit d'air acquis, du régime acquis, de la charge acquise et du type de post-injection en cours d'application ; et
■ des moyens (34) de sélection d'un mode parmi les premier et second modes de fonctionnement des moyens (8) d'alimentation en fonction de la température acquise en amont du catalyseur d'oxydation (7) et de la température estimée en aval de celui-ci.

2. Système selon la revendication 1, **caractérisé en ce que** les moyens (17) de pilotage comportent des premiers moyens (30) de sélection d'un mode parmi les premier et second modes de fonctionnement des moyens (8) d'alimentation à partir d'une loi de sélection prédéterminée du type à hystérésis.

3. Procédé d'aide à la régénération d'un filtre à particules (6) agencé dans une ligne d'échappement (3) d'un moteur Diesel (1) de véhicule automobile et associé à un catalyseur d'oxydation (7) agencé dans ladite ligne (3), le moteur (1) étant équipé de moyens (8) d'alimentation aptes à injecter du carburant dans les cylindres de celui-ci lors de leur phase de détente, lors de post-injections, ledit procédé comportant une étape de pilotage des moyens (8) d'alimentation selon une stratégie de régénération du filtre à particules (6) comportant une sous-étape de basculement des moyens (8) d'alimentation entre un premier mode de fonctionnement avec un premier type de post-injection pour amorcer le catalyseur d'oxydation (7) et un second mode de fonctionnement avec un second type de post-injection pour la production d'un exotherme par le catalyseur d'oxydation (7) amorcé afin de régénérer le filtre à particules (6),
**caractérisé en ce qu'**il comporte une unique étape de mesure de température, cette étape consistant à mesurer la température en amont du catalyseur d'oxydation au moyen d'un unique capteur de température, et **en ce que** la sous-étape de basculement des moyens (8) d'alimentation entre les premier et second modes de fonctionnement comporte une sélection d'un mode parmi les premier et second modes de fonctionnement en fonction de la température acquise en amont du catalyseur d'oxydation (7) et de la température estimée en aval du catalyseur d'oxydation (7), cette température estimée étant fonction de la température acquise en amont du catalyseur d'oxydation (7),du débit d'air en entrée du moteur, du régime de rotation du moteur et de la charge de celui-ci et du type de post-injection en cours d'application.

## Claims

1. System for promoting the regeneration of a particle filter (6) disposed in an exhaust line (3) of a motor vehicle diesel engine (1) and associated with an oxidation catalytic converter (7) disposed in said line (3), the engine (1) being equipped with means (2) for admitting air into it and supply means (8) adapted for injecting fuel into the cylinders thereof during the expansion phase thereof, during post-injections, the system comprising a single temperature sensor (18) arranged in the exhaust line (3) upstream from the oxidation catalytic converter (7) and means (17) for controlling the supply means, adapted for controlling them using a strategy for regenerating the particle filter (6) in which the control means (17) are adapted for switching the supply means (8) between a first operating mode, with a first type of post-injection for activating the oxidation catalytic converter (7), and a second operating mode, with a second type of post-injection for producing an exotherm by means of the activated oxidation catalytic converter (7) in order to regenerate the particle filter (6), **characterised**
- **in that** the system comprises means for detecting an air flow into the engine, the engine rotation speed and the engine load;
- and **in that** the control means (17) comprise second means (31) for selecting a mode from the first and second operating modes of the supply means (8), comprising:
- means (33) for estimating the temperature downstream from the oxidation catalytic converter (7) as a function of the temperature detected upstream therefrom, the detected airflow, the detected engine speed, the detected engine load, and the type of post-injection being applied; and
- means (34) for selecting a mode from the first and second operating modes of the supply means (8) as a function of the temperature detected upstream from the oxidation catalytic converter (7) and the estimated temperature downstream therefrom.

2. System according to claim 1, **characterised in that** the control means (17) comprise first means (30) for selecting a mode from the first and second operating modes of the supply means (8) using a predetermined hysteresis-type selection rule.

3. Method for promoting the regeneration of a particle filter (6) disposed in an exhaust line (3) of a motor vehicle diesel engine (1) and associated with an oxidation catalytic converter (7) disposed in said line (3), the engine (1) being equipped with supply means (8) adapted for injecting fuel into the cylinders thereof during the expansion phase thereof, during post-injections, said method comprising a step of controlling the supply means (8) using a strategy for regenerating the particle filter (6) comprising a sub-step of switching the supply means (8) between a first operating mode, with a first type of post-injection for activating the oxidation catalytic converter (7), and a second operating mode, with a second type of post-injection for producing an exotherm by means of the activated oxidation catalytic converter (7) in order to regenerate the particle filter (6),
**characterised in that** it comprises a single temperature measurement step, this step consisting of measuring the temperature upstream from the oxidation catalytic converter using a single temperature sensor, and **in that** the sub-step of switching the supply means (8) between the first and second operating modes comprises selecting a mode from the first and second operating modes as a function of the temperature detected upstream from the oxidation catalytic converter (7) and the estimated temperature downstream from the oxidation catalytic converter (7), this estimated temperature being a function of the temperature detected upstream from the oxidation catalytic converter (7), the detected airflow into the engine, the detected engine speed, the detected engine load, and the type of post-injection being applied.

## Patentansprüche

1. System zur Regenerierung eines Partikelfilters (6), der in einer Abgasleitung (3) eines Dieselmotors (1) eines Kraftfahrzeugs angeordnet ist und mit einem in der Leitung (3) angeordneten Oxidationskatalysator (7) in Verbindung steht, wobei der Motor (1) mit Mitteln (2) zum Einlass von Luft in denselben und Versorgungsmitteln(8) ausgestattet ist, die dazu geeignet sind, Kraftstoff in die Zylinder desselben während ihrer Expansionsphase, während der Nacheinspritzungen, einzuspritzen, wobei das System einen einzigen Temperatursensor (18) umfasst, der in der Abgasleitung (3) stromaufwärts vor dem Oxidationskatalysator (7) angeordnet ist, und Mittel (17) zur Steuerung der Versorgungsmittel, die dazu geeignet sind, diese gemäß einer Strategie zur Regenerierung des Partikelfilters (6) zu steuern, wobei die Steuerungsmittel(17) zur Steuerung dazu geeignet sind, die Versorgungsmittel (8) zur Versorgung zwischen einem ersten Betriebsmodus mit einer ersten Art der Nacheinspritzung für das Aktivieren des Oxidationskatalysators (7) und einem zweiten Betriebsmodus mit einer zweiten Art der Nacheinspritzung für die Erzeugung einer exothermen Reaktion durch den aktivierten Oxidationskatalysator (7), um den Partikelfilter (6) zu regenerieren, umzuschalten,
**dadurch gekennzeichnet,**
• **dass** das System Mittel zur Erfassung einer Luftmenge am Eingang des Motors, der Drehzahl des Motors und der Ladung desselben umfasst;
• und **dadurch**, dass die Steuerungsmittel (17) zur Steuerung zweite Mittel (31) zur Auswahl eines Modus aus dem ersten und dem zweiten Betriebsmodus der Versorgungsmittel (8) aufweisen, umfassend:
• Mittel (33) zum Abschätzen der Temperatur stromabwärts nach dem Oxidationskatalysator (7) in Abhängigkeit der stromaufwärts vor demselben erfassten Temperatur, der erfassten Luftmenge, der erfassten Drehzahl, der erfassten Ladung und der angewendeten Art der Nacheinspritzung im Laufe der Anwendung; und
• Mittel (34) zur Auswahl eines Modus aus dem ersten und dem zweiten Betriebsmodus der Versorgungsmittel (8) zur Versorgung in Abhängigkeit der stromaufwärts vor dem Oxidationskatalysator (7) erfassten Temperatur und der stromabwärts nach demselben abgeschätzten Temperatur.

2. System nach Anspruch 1, **dadurch gekennzeichnet, dass** die Steuerungsmittel (17) zur Steuerung erste Mittel (30) zur Auswahl eines Modus aus dem ersten und dem zweiten Betriebsmodus der Versorgungsmittel (8) zur Versorgung ausgehend von einem vorbestimmten Auswahlgesetz vom Hysteresetyp umfassen.

3. Verfahren zur Regenerierung eines Partikelfilters (6), der in einer Abgasleitung (3) eines Dieselmotors (1) eines Kraftfahrzeugs angeordnet ist und mit einem in der Leitung (3) angeordneten Oxidationskatalysator (7) in Verbindung steht, wobei der Motor (1) mit Versorgungsmittel (8) zur Versorgung ausgestattet ist, die dazu geeignet sind, Kraftstoff in die Zylinder desselben während ihrer Expansionsphase, während der Nacheinspritzungen, einzuspritzen, wobei das Verfahren einen Schritt zur Steuerung der Versorgungsmittel (8) gemäß einer Strategie zur Regenerierung des Partikelfilters (6) aufweist, umfassend einen Unterschritt zur Umschaltung der Mittel (8) zur Versorgung zwischen einem ersten Betriebsmodus mit einer ersten Art der Nacheinspritzung für das Aktivieren des Oxidationskatalysators (7) und einem zweiten Betriebsmodus mit einer zweiten Art der Nacheinspritzung für die Erzeugung einer exothermen Reaktion durch den aktivierten Oxidationskatalysator (7), um den Partikelfilter (6) zu regenerieren,
**dadurch gekennzeichnet, dass** es einen einzigen Schritt zur Messung der Temperatur umfasst, wobei dieser Schritt aus der Messung der Temperatur stromaufwärts vor dem Oxidationskatalysator mithilfe eines einzigen Temperatursensors besteht, und **dadurch**, dass der Unterschritt zur Umschaltung der Versorgungsmittel (8) zur Versorgung zwischen dem ersten und dem zweiten Betriebsmodus eine Auswahl eines Modus aus dem ersten und dem zweiten Betriebsmodus in Abhängigkeit der stromaufwärts vor dem Oxidationskatalysator (7) erfassten Temperatur und der stromabwärts nach dem Oxidationskatalysator (7) abgeschätzten Temperatur umfasst, wobei diese abgeschätzte Temperatur von der stromaufwärtsvor dem Oxidationskatalysator (7) erfassten Temperatur, der Luftmenge am Eingang des Motors, der Drehzahl des Motors und der Ladung desselben sowie der angewendeten Art der Nacheinspritzung abhängig ist.
